# FASCICULE DE BREVET EUROPEEN

(11) **EP 2 522 576 B1**
(45) Date de publication et mention de la délivrance du brevet: **25.03.2015**
(21) Numéro de dépôt: 12167327.1
(22) Date de dépôt: 09.05.2012
(51) Int. Cl.: B64D 45/02, F16L 13/10, F16L 25/01, F16L 25/02, H01R 4/04, H01R 4/64, F16L 25/03, B64D 37/32

(54) **Dispositif de raccordement de tuyauteries carburant pour aéronef**
Anschlussvorrichtung für die Kraftstoffrohrleitungen eines Luftfahrzeugs
Connecting device for aircraft fuel lines

(30) Priorité: 09.05.2011 FR 1153974
(43) Date de publication de la demande: 14.11.2012
(73) Titulaire: Airbus Operations S.A.S., 31060 Toulouse (FR)
(72) Inventeur: Courpet, Alexis, 31620 FRONTON (FR); Barre, Thomas, 31500 TOULOUSE (FR); Bourbon, Olivier, 82600 AUCAMVILLE (FR); Biteau, Mathieu, 31300 TOULOUSE (FR); Roques, Jean-Marc, 31300 TOULOUSE (FR); Sable, Cédric, 31300 TOULOUSE (FR)
(74) Mandataire: Gicquel, Olivier Yves Gérard

(56) Documents cités:
- EP-A1- 0 279 979
- EP-A1- 2 189 702
- FR-A1- 2 948 254
- US-A1- 2010 001 512
- US-A1- 2010 226 063

## Description

La présente invention traite de la protection des tuyauteries et en particulier des tuyauteries carburant contre la foudre dans les aéronefs à structure composite et propose pour ce faire un dispositif de raccordement de tuyauteries carburant pour aéronef comportant des embouts de résistivité adaptée.

Dans les aéronefs, le cheminement des tubulures carburant est complexe et nécessite de nombreux changements de direction ce qui impose de réaliser des pièces de raccordement entre tubes de géométrie divers.

En outre, dans le cas des aéronefs à fuselage et voilures composite, la conductivité de la structure est très inférieure à celle des cheminements de tubes métalliques et de ce fait, une part très importante des courants de foudre passe dans ces cheminements.

En cas d'excès de courant, une détérioration de ces cheminements peut théoriquement se produire.

Pour limiter le passage des courants de foudre, il est nécessaire d'intégrer dans les tuyauteries constituant ces cheminements des parties isolantes ou plus résistives que la structure.

Il est toutefois également nécessaire d'évacuer les charges électrostatiques pouvant s'accumuler dans les tuyauteries.

Ceci est d'autant plus nécessaire lorsque les tuyauteries se situent dans un réservoir de carburant.

Les tuyauteries métalliques actuelles sont notamment équipées de raccords métalliques sertis ou soudés, mâles ou femelles, et comportent des pattes de métallisation soudées sur le tube.

Dans un avion à structure composite, par exemple à structure en fibres de carbone, les tuyauteries sont généralement fabriquées soit en matériaux hautement résistifs soit en métal (Aluminium, Titane, Inox). Les raccords sont généralement fabriqués en aluminium.

Le document EP 2189702 décrit ainsi des tuyauteries résistives assemblés à des raccords conducteurs, les tuyauteries résistives étant électriquement connectées aux raccords conducteurs par l'intermédiaire d'un élément conducteur. Il dévoile le préambule de la revendication 1. Les tuyauteries composites actuelles sont équipées de raccords métalliques collés comportant des pattes de métallisation qui sont collées ou intégrées lors de la fabrication du tube. Le raccord métallique comporte aussi des pattes de métallisation c'est à dire des pattes de reprise d'une tresse métallique de mise à la masse dite tresse de métallisation.

Dans le cas de raccords usinés ou moulés les embouts mâles ou femelles sont usinés.

Les solutions existantes pour la résolution du problème se font en ajoutant des éléments isolants entre 2 tuyauteries et en mettant les tronçons isolés à la masse.

Il est connu de couper le cheminement électrique le long des tuyauteries et notamment le document EP 0 297 990 A1 propose de couper le chemin électrique en réalisant des tubes au moins partiellement en matériau électriquement isolant, le document EP 2 034 228 A1 décrit d'utiliser des inserts isolant entre les tubes, le document EP 0 217 313 décrit d'isoler les tubes les uns des autres et de mettre à la masse certains des tubes.

En résumé, pour répondre aux contraintes d'élimination des charges électrostatiques tout en limitant le passage des courants de foudre, les tubulures métalliques ne sont pas assez résistives et doivent être tronçonnées, les matériaux thermoplastiques seuls sont trop résistifs ce qui limite la longueur de tuyauterie admissible.

Pour résoudre le problème précité, le document FR2 948 254 A1 de la demanderesse prévoit d'alterner des pièces de jonction métalliques et des pièces de jonction isolantes. Cette configuration nécessite des pièces de jonction entre tubes de géométrie compliquée; de plus, ces pièces de jonction doivent être réalisées dans des matériaux différents.

La présente invention propose une solution simple et s'appliquant plus particulièrement à un cheminement de tuyauteries véhiculant du kérosène et se situant dans un réservoir de carburant se trouvant généralement dans les voilures.

Pour ce faire, la présente invention propose un dispositif de jonction de tuyauterie carburant d'aéronef selon les caractéristiques de la revendication 1.

Selon un mode de réalisation particulier, le matériau isolant est un matériau thermoplastique notamment du polyétheréthercétone (PEEK).

Avantageusement, les fibres conductrices sont des fibres de quelques nanomètres à 5 mm.

Selon un premier mode de réalisation, les fibres conductrices sont des fibres de carbone.

Selon un mode de réalisation alternatif, les fibres conductrices sont des fibres courtes diverses notamment de 0,1 à 10% de carbone et/ou graphite et/ou PTFE.

Préférablement, les fibres conductrices sont des fibres de résistivité comprise entre 1 et 100 Ω.mm²/m.

Selon un aspect avantageux de l'invention, le collage des embouts sur les tubes et raccords est un collage utilisant une colle adaptée à évacuer les charges électrostatiques.

La colle est avantageusement une colle époxyde/argent de résistivité de 1000 à 4000 µΩ.cm assurant un contact électrique entre les embouts et les tubes et raccords.

Selon un mode de réalisation particulier de l'invention, au moins certains des embouts comportent des pattes de métallisation de réception de tresses de masse reliées aux tubes.

Les embouts femelles ont préférablement une longueur de plus de 25 mm de protection contre les arcs électriques rampants.

Avantageusement, les embouts mâles sont pourvus d'une gorge recevant un joint torique et le diamètre interne d'une jupe des embouts femelles recevant lesdits embouts mâles est adapté à réaliser une étanchéité au niveau du joint torique.

Selon un mode de réalisation particulier, au moins certains des embouts sont des embouts isolants notamment des embouts réalisés en PEEK chargé de fibres de verre.

L'invention s'applique à un aéronef comportant des tubulures munies de dispositifs de jonction tels que décrits ci-dessus.

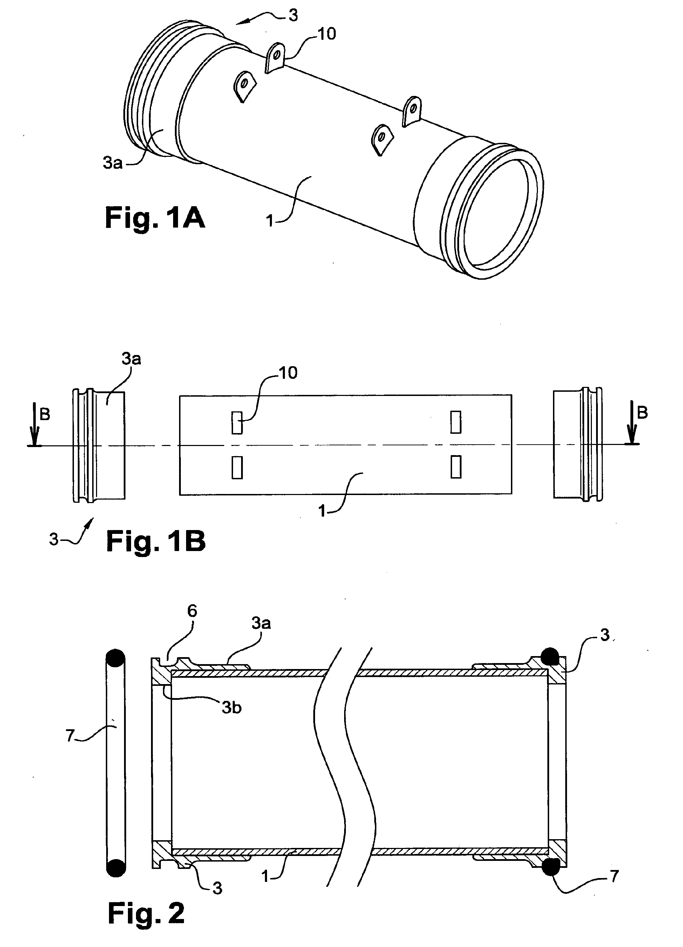

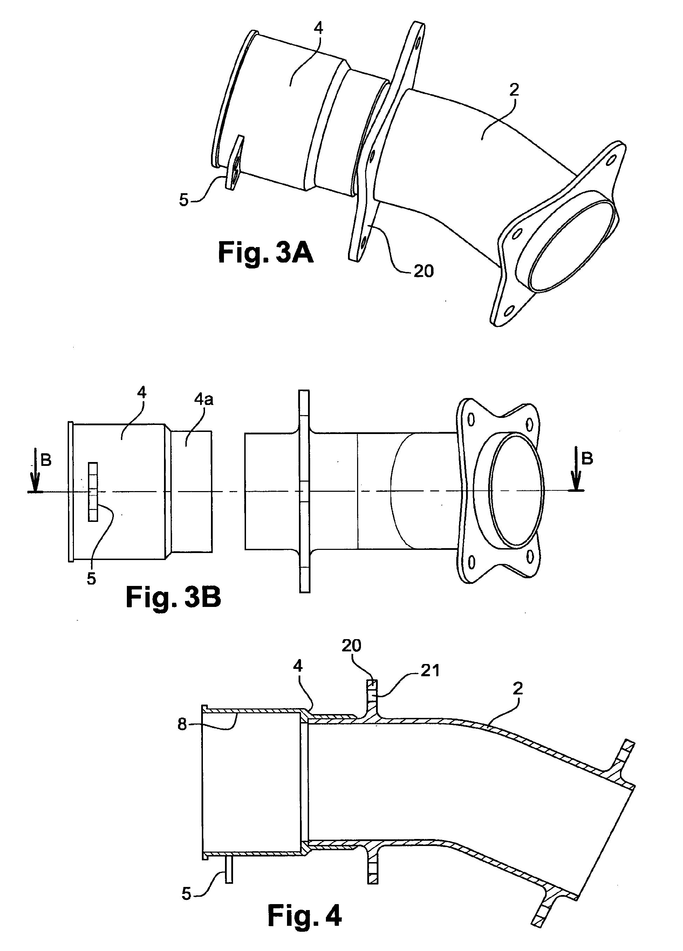

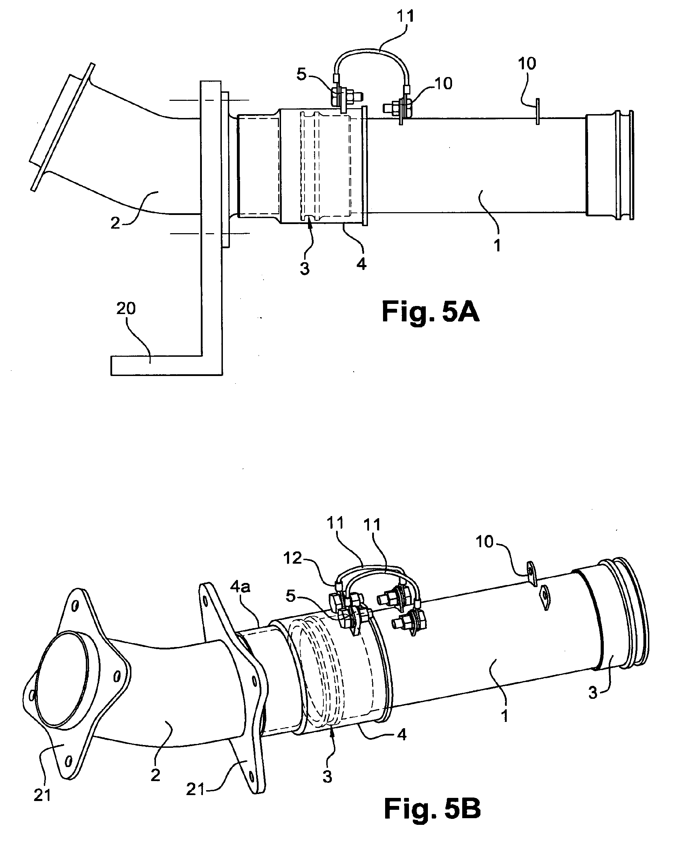

D'autres caractéristiques et avantages de l'invention seront apparents à la lecture de la description qui suit d'exemples non limitatifs de réalisation de l'invention en référence aux dessins qui représentent:
aux figures 1A et 1B: des vues respectivement en perspective et de côté d'un tube comportant deux embouts mâles selon le dispositif de l'invention;
en figure 2: une vue en coupe du tube de la figure 1 ;
aux figures 3A et 3B: des vues respectivement en perspective et de côté d'un raccord pourvu d'un embout femelle selon le dispositif de l'invention;
en figure 4: une vue de côté en coupe du raccord de la figure 3.
aux figures 5A et 5B : des vues respectivement de côté et en perspective d'un raccordement électrique de tubulures équipées du dispositif de l'invention sur la structure de l'aéronef.

L'exemple de la figure 1A représente un tube 1 de tuyauterie équipé d'embouts 3 collés sur le tube selon l'invention. Les embouts qui sont collés sur les extrémités du tube sont ici des embouts mâles 3.

Un matériau adapté à être moulé, résistant aux hydrocarbures et ayant une résistivité au feu comparable à l'aluminium est le polyétheréthercétone (PEEK). Ce matériau plastique sera ici préféré.

Pour réaliser les embouts hautement résistifs, le PEEK est selon l'exemple chargé avec des fibres courtes de résistivité réduite, résistivité comprise entre 1 à 50 Ω.mm²/m pour lui donner sa tenue mécanique et le rendre suffisamment conducteur pour éliminer les charges électrostatiques.

Pour les fibres il est notamment possible de choisir des fibres de carbone, ce matériau ayant une résistivité volumique de 40 Ω.mm2/m alors que le graphite, autre charge possible, a une résistivité volumique de 8 Ω.mm2/m.

Les fibres courtes sont des fibres de quelques nanomètres à environ 5mm.

Les fibres de carbone présentant une résistivité et des qualités mécaniques appropriées seront préférées et le pourcentage de charge est de l'ordre de 10 à 40%, dans le cas du carbone, une valeur de 30% ± 10% étant particulièrement adaptée.

En dosant la concentration de fibres courtes, en particulier des fibres de carbone on obtient, la conductivité/résistivité souhaitée des embouts hautement résistifs et la tenue aux pressions rencontrées dans les tuyauteries carburant aéronef.

Il est possible aussi de mélanger des fibres et un dosage peut notamment être 10% carbone, 10% graphite, 10% polytétrafluoroéthylène (PTFE) avec des variations relatives entre ces éléments.

Les embouts s'insèrent longitudinalement sur le tube, comme représenté en figure 1B, et comportent un manchon 3a qui se colle sur la paroi externe du tube.

Selon l'exemple représenté, les embouts mâles se collent sur les tubes de la tuyauterie et les embouts femelles se collent sur les raccords permettant la fixation de la tuyauterie sur la structure de l'aéronef et/ou permettant de réaliser des changements de direction de la tuyauterie.

Bien entendu il est possible d'inverser le montage pour avoir les embouts mâles sur les raccords et les embouts femelles sur les tubes.

Selon la figure 2, les embouts 3 comportent un épaulement annulaire 3b qui stoppe l'enfoncement de l'embout sur le tube.

Les embouts mâles 3 sont pourvus d'une gorge 6 recevant un joint torique 7.

L'invention combine des embouts mâles et des embouts femelles pour réaliser les liaisons et la figure 3A représente un embout femelle 4 disposé sur un raccord 2, par exemple un raccord coudé 2 ou un raccord de traversée de cloison.

Le raccord est un raccord métallique ou hautement résistif.

Selon la figure 3B, l'embout femelle se positionne sur l'extrémité du raccord au moyen d'un manchon 4a de diamètre intérieur compatible au collage de l'embout sur le diamètre externe de la terminaison du raccord.

Le manchon est dimensionné pour offrir une surface de collage adaptée.

L'embout femelle comporte en prolongement du manchon une jupe 8 de diamètre élargi par rapport au manchon 4a.

La jupe se monte sur l'embout mâle et son diamètre interne est adapté à réaliser une étanchéité au niveau du joint torique 7 disposé sur l'embout mâle 3.

Bien que les figures 1A et 3A montrent des embouts mâles sur un tube et un embout femelle sur un raccord, il est possible selon l'invention de disposer des embouts mâles ou femelles sur les tubes et les raccords ou de panacher sur un même tube embout mâle et embout femelle.

En adaptant leur dimensionnement, les embouts de l'invention permettent ainsi l'utilisation des standards existants (joints, etc...) et permettent d'assurer une étanchéité et un rattrapage de tolérances au moyen de l'emboîtement avec joint torique entre tube et raccord ou tube et tube.

Selon la figure 3A, l'embout femelle comporte des pattes de fixation 5 adaptées à connecter une tresse de masse et à conduire le courant généré par les charges électrostatiques sur la tubulure vers cette structure. Le raccord coudé 2 comporte des pattes 20 de fixation sur la structure de l'aéronef et il est possible dans le cas d'un raccord isolant de relier la tresse de masse au niveau de la fixation du raccord sur la structure.

Des changements de section sont en outre possibles en adaptant les diamètres respectifs de la jupe et du manchon femelle et en jouant sur l'épaisseur des manchons mâles.

La longueur des embouts femelles 4 et notamment de la jupe 8 est déterminée pour empêcher la formation d'arcs électriques entre deux segments de tubes en cas de foudre.

Le collage des embouts sur les tubes métalliques ou hautement résistifs et raccords métalliques ou hautement résistifs est un collage préférablement à base de époxyde/argent de résistivité de 1000 à 4000 µΩ.cm.

Il est destiné à assurer un contact électrique suffisant pour évacuer les charges électrostatiques s'accumulant sur les embouts, les tubes et les raccords.

Le dispositif de l'invention assure la protection des courants de foudre et l'évacuation des courants électrostatiques tout en étant adaptable aux types d'environnements composite/métallique.

Les embouts hautement résistifs de l'invention assurent ainsi une isolation contre les courants de foudre tout en permettant une évacuation des charges électrostatiques s'accumulant sur la tuyauterie par frottement du liquide.

Dans le but d'éviter les arcs électriques rampants (phénomène d'arc qui rampe sur une surface) , les embouts ont une longueur supérieure à 25 mm.

Pour fixer les idées, une contrainte de réalisation est que la distance minimale entre 2 partie métallique distincte choisie soit supérieure à 10 mm afin d'éviter un claquage électrique dans l'air avec une tension de l'ordre de 10 kilovolts.

Le dispositif de l'invention permet par l'usage d'embouts hautement résistifs de réaliser des tubulures protégées contre la foudre et évacuant les charges électrostatiques, que les tubulures soient métalliques, composites ou plastiques.

Il est parfaitement adapté pour des tubulures cheminant au moins en partie dans des réservoirs de kérosène.

Il offre un gain de productivité par la suppression des opérations de soudage, sertissage, usinage, par la suppression du collage des pattes de métallisation sur les tubes composites et par la suppression des tuyauteries hautement résistives onéreuses.

En maîtrisant la teneur du PEEK en fibres courtes, il est possible d'agir sur la conductivité/résistivité du matériau, sa tenue aux efforts et sa masse.

De ce fait la solution proposée s'adapte aux besoins spécifiques de chaque aéronef.

La figure 5A représente en vue de côté un dispositif de jonction utilisant des embouts femelles de l'invention.

Les embouts mâles 3 sont montés aux extrémités du tube 1, l'embout femelle 4 étant enfilé sur l'un des embouts mâles.

L'embout femelle 4, représenté en transparence, est monté et collé par sa terminaison 4a sur un raccord conducteur 2.

Il comporte des pattes de métallisation 5 de fixation et de contact avec des cosses 12 de terminaison de tresses de masse 11 reliées aux pattes de métallisation 10 du tube 1.

Le raccord 2, ici de type raccord coudé, est fixé sur un support 20 lui même fixé sur la structure de l'aéronef ou du réservoir de l'aéronef.

Ce raccord peut notamment être un raccord métallique ou un raccord lui même hautement résistif.

Le support assure la mise à la masse du raccord 2 et, du fait de la conductivité de l'embout 4 et des tresses 11, les charges électrostatiques accumulées sur le tube 1 sont évacuées vers la structure au travers de l'embout, du raccord et du support.

La figure 5B représente en perspective le raccordement du tube sur le raccord coudé 2 au moyen des embouts mâle et femelle 3, 4 de sorte que l'on visualise les trous de fixation 21 du raccord sur le support de la figure 5A.

Un avantage non négligeable est de conserver le raccord 2 non modifié dans sa partie coudée ce qui permet de réaliser des raccords adaptés à la courbure souhaitée et résistant aux efforts éventuels de torsion de la tuyauterie alors que les embouts standardisés par l'invention sont soumis aux efforts de pression du liquide contenu dans la tuyauterie.

L'invention permet en outre de conserver des raccords répondant aux contraintes de courbure et résistant aux efforts éventuels de torsion de la tuyauterie alors que les embouts sont adaptés aux efforts de pression du liquide contenu dans la tuyauterie.

## Revendications

1. Dispositif de jonction pour tuyauterie carburant d'aéronef, comportant des embouts mâles (3) en matériau hautement résistif, constitué par un matériau isolant chargé en fibres conductrices et des embouts femelles (4), lesdits embouts étant adaptés à être collés aux extrémités de tubes (1) de la tuyauterie ou aux extrémités de raccords (2) de la tuyauterie, les embouts mâles/femelles (3, 4) étant combinables avec les embouts correspondants du genre opposé pour réaliser la jonction entre les tubes et/ou les raccords, **caractérisé en ce que** les embouts femelles sont également en matériau hautement résistif constitué par un matériau isolant chargé en fibres conductrices.

2. Dispositif de jonction de tuyauterie carburant d'aéronef selon la revendication 1 **caractérisé en ce qu'**un premier desdits embouts est apte à s'insérer longitudinalement sur l'extrémité d'un tube de la tuyauterie et comporte un manchon (3a) apte à se coller sur la paroi externe dudit tube, un second desdits embouts étant apte à se coller sur un raccord (2) de la tuyauterie, lesdits premier et second embouts étant l'un une embout mâle et l'autre un embout femelle, et étant raccordés pour réaliser la jonction entre ledit tube et ledit raccord.

3. Dispositif de jonction de tuyauterie carburant d'aéronef selon l'une quelconque des revendications 1 et 2, **caractérisé en ce que** le matériau isolant est un matériau thermoplastique notamment du polyétheréthercétone (PEEK).

4. Dispositif de jonction selon l'une quelconque des revendications 1 à 3, **caractérisé en ce que** les fibres conductrices sont des fibres de quelques nanomètres à 5 mm.

5. Dispositif de jonction selon l'une quelconque des revendications 1 à 4 **caractérisé en ce que** les fibres conductrices sont des fibres de carbone.

6. Dispositif de jonction selon l'une quelconque des revendications 1 à 4 **caractérisé en ce que** les fibres conductrices sont des fibres courtes diverses notamment de 0,1 à 10% de carbone et/ou graphite et/ou polytétrafluoroéthylène (PTFE).

7. Dispositif de jonction selon l'une quelconque des revendications 3 à 7 **caractérisé en ce que** les fibres conductrices sont des fibres de résistivité comprise entre 1 et 100 Ω.mm²/m.

8. Dispositif de jonction selon l'une quelconque des revendications précédentes **caractérisé en ce que** le collage des embouts sur les tubes et raccords est un collage utilisant une colle adaptée à évacuer les charges électrostatiques.

9. Dispositif de jonction selon la revendication 8 **caractérisé en ce que** la colle est une colle époxyde/argent de résistivité de 1000 à 4000 µΩ.cm assurant un contact électrique entre les embouts et les tubes et raccords.

10. Dispositif de jonction selon l'une quelconque des revendications précédentes **caractérisé en ce qu'**au moins certains des embouts comportent des pattes de métallisation de réception de tresses de masse reliées aux tubes.

11. Dispositif de jonction selon l'une quelconque des revendications précédentes **caractérisé en ce que** les embouts femelles (4) ont une longueur de plus de 25 mm de protection contre les arcs électriques rampants.

12. Dispositif de jonction selon l'une quelconque des revendications précédentes **caractérisé en ce que** les embouts mâles (3) sont pourvus d'une gorge (6) recevant un joint torique (7) et **en ce que** les embouts femelles (4) sont pourvus d'une jupe (8) destinée à recevoir lesdits embouts mâles (3), le diamètre interne de ladite jupe (8) des embouts femelles (4) étant adapté à réaliser une étanchéité au niveau du joint torique.

13. Aéronef comportant des tubulures munies de dispositifs de jonction selon l'une quelconque des revendications précédentes.

## Patentansprüche

1. Anschlussvorrichtung für Kraftstoffrohrleitung eines Luftfahrzeugs, die Steckeransätze (3) aus hochresistivem Werkstoff, der aus einem isolierenden Werkstoff mit leitenden Fasern besteht, und Steckbuchsenansätze (4) aufweist, wobei die Ansätze angepasst sind, um an die Enden der Rohre (1) der Rohrleitung oder an die Enden der Anschlüsse (2) der Rohrleitung geklebt zu werden, wobei die Steckeransätze / Steckbuchsenansätze (3, 4) mit den entsprechenden Ansätzen des entgegengesetzten Typs kombiniert werden können, um den Anschluss zwischen den Rohren und/oder den Anschlüssen herzustellen, **dadurch gekennzeichnet, dass** die Steckbuchsenansätze ebenfalls aus hochresistivem Werkstoff, der aus einem isolierenden Werkstoff mit leitenden Fasern besteht, bestehen.

2. Anschlussvorrichtung für Kraftstoffrohrleitung eines Luftfahrzeugs nach Anspruch 1, **dadurch gekennzeichnet, dass** ein erster der Ansätze geeignet ist, sich längs auf dem Ende eines Rohrs der Rohrleitung einzufügen und eine Hülse (3a) aufweist, die geeignet ist, um sich an die Außenwand des Rohrs zu kleben, wobei ein zweiter der Ansätze geeignet ist, sich auf einen Anschluss (2) der Rohrleitung zu kleben, wobei der eine der ersten und zweiten Ansätze ein Steckeransatz und der andere ein Steckbuchsenansatz ist und sie angeschlossen sind, um den Anschluss zwischen dem Rohr und dem Anschluss herzustellen.

3. Anschlussvorrichtung für Kraftstoffrohrleitung eines Luftfahrzeugs nach einem der Ansprüche 1 und 2, **dadurch gekennzeichnet, dass** der isolierende Werkstoff ein Thermoplastwerkstoff ist, insbesondere Polyetheretherketon (PEEK).

4. Anschlussvorrichtung nach einem der Ansprüche 1 bis 3, **dadurch gekennzeichnet, dass** die leitenden Fasern Fasern von einigen Nanometern bis 5 mm sind.

5. Anschlussvorrichtung nach einem der Ansprüche 1 bis 4, **dadurch gekennzeichnet, dass** die leitenden Fasern Carbonfasern sind.

6. Anschlussvorrichtung nach einem der Ansprüche 1 bis 4, **dadurch gekennzeichnet, dass** die leitenden Fasern unterschiedliche kurze Fasern sind, insbesondere mit 0,1 bis 10 Prozent Carbon und/oder Graphit und/oder Polytetrafluorethylen (PTFE).

7. Anschlussvorrichtung nach einem der Ansprüche 3 bis 7, **dadurch gekennzeichnet, dass** die leitenden Fasern Fasern mit einem spezifischen Widerstand zwischen 1 und 100 Ω.mm²/m sind.

8. Anschlussvorrichtung nach einem der vorhergehenden Ansprüche, **dadurch gekennzeichnet, dass** das Kleben der Ansätze auf die Rohre und Anschlüsse ein Kleben ist, das einen Klebstoff verwendet, der geeignet ist, um elektrostatische Ladungen abzuleiten.

9. Anschlussvorrichtung nach Anspruch 8, **dadurch gekennzeichnet, dass** der Klebstoff ein Epoxid-/Silber-Klebstoff mit einem spezifischen Widerstand von 1000 bis 4000 µΩ.cm ist, der einen elektrischen Kontakt zwischen den Ansätzen und den Rohren und den Anschlüssen sicherstellt.

10. Anschlussvorrichtung nach einem der vorhergehenden Ansprüche, **dadurch gekennzeichnet, dass** mindestens bestimmte der Ansätze Metallisierungspratzen zum Aufnehmen von Masseflechten, die mit den Rohren verbunden sind, aufweisen.

11. Anschlussvorrichtung nach einem der vorhergehenden Ansprüche, **dadurch gekennzeichnet, dass** die Steckbuchsenansätze (4) eine Länge von mehr als 25 mm Schutz gegen die kriechenden Lichtbögen haben.

12. Anschlussvorrichtung nach einem der vorhergehenden Ansprüche, **dadurch gekennzeichnet, dass** die Steckeransätze (3) mit einer Hohlkehle (6) versehen sind, die eine O-Ring-Dichtung (7) aufnimmt, und dass die Steckbuchsenansätze (4) mit einer Schürze (8) versehen sind, die dazu bestimmt ist, die Steckeransätze (3) aufzunehmen, wobei der Innendurchmesser der Schürze (8) der Steckbuchsenansätze (4) angepasst ist, um eine Abdichtung im Bereich der O-Ring-Dichtung herzustellen.

13. Luftfahrzeug, das Rohrleitungen aufweist, die mit Anschlussvorrichtungen nach einem der vorhergehenden Ansprüche versehen sind.

## Claims

1. Joint device for aircraft fuel line, comprising male end-fittings (3) made of high-strength material consisting of an insulating material filled with conductive fibres and female end-fittings (4), said end-fittings being designed to be bonded to the ends of pipes (1) of the line or to the ends of couplings (2) of the line, the male/female end-fittings (3, 4) being able to be combined with the corresponding end-fittings of the opposite kind to produce the joint between the pipes and/or the couplings, **characterized in that** the female end-fittings are also made of high-strength material, consisting of an insulating material filled with conductive fibres.

2. Joint device for aircraft fuel line according to Claim 1, **characterized in that** a first of said end-fittings is suitable for being longitudinally inserted onto the end of a pipe of the line and comprises a sleeve (3a) suitable for being bonded onto the outer wall of said pipe, a second of said end-fittings being suitable for being bonded onto a coupling (2) of the line, said first and second end-fittings being, for one, a male end-fitting, and, for the other, a female end-fitting, and being coupled to produce the joint between said pipe and said coupling.

3. Joint device for aircraft fuel line according to any one of Claims 1 or 2, **characterized in that** the insulating material is a thermoplastic material, notably polyether ether ketone (PEEK).

4. Joint device according to any one of Claims 1 to 3, **characterized in that** the conductive fibres are fibres from a few nanometres to 5 mm.

5. Joint device according to any one of Claims 1 to 4, **characterized in that** the conductive fibres are carbon fibres.

6. Joint device according to any one of Claims 1 to 4, **characterized in that** the conductive fibres are diverse short fibres notably from 0.1 to 10% carbon and/or graphite and/or polytetrafluoroethylene (PTFE).

7. Joint device according to any one of Claims 3 to 7, **characterized in that** the conductive fibres are resistive fibres of between 1 and 100 Ω.mm²/m.

8. Joint device according to any one of the preceding claims, **characterized in that** the bonding of the end-fittings onto the pipes and couplings is a bonding using an adhesive suitable for discharging electrostatic charges.

9. Joint device according to Claim 8, **characterized in that** the adhesive is an epoxy/silver adhesive with a resistivity of 1000 to 4000 µΩ.cm ensuring an electrical contact between the end-fittings and the pipes and couplings.

10. Joint device according to any one of the preceding claims, **characterized in that** at least some of the end-fittings include metallization tabs for receiving ground braids linked to the pipes.

11. Joint device according to any one of the preceding claims, **characterized in that** the female end-fittings (4) have a length of more than 25 mm for protection against creeping electrical arcs.

12. Joint device according to any one of the preceding claims, **characterized in that** the male end-fittings (3) are provided with a groove (6) receiving an o-ring seal (7) and **in that** the female end-fittings (4) are provided with a skirt (8) intended to receive said male end-fittings (3), the internal diameter of said skirt (8) of the female end-fittings (4) being designed to produce a seal at the level of the o-ring seal.

13. Aircraft comprising nozzles provided with joint devices according to any one of the preceding claims.
